## Europäisches Patentamt

## European Patent Office

## Office européen des brevets

(19)

(11) Veröffentlichungsnummer: **0 015 425**
**B1**

(12) **EUROPÄISCHE PATENTSCHRIFT**

(45) Veröffentlichungstag der Patentschrift:
21.09.83

(51) Int. Cl.³: **G 02 B 5/16**

(21) Anmeldenummer: **80100763.4**

(22) Anmeldetag: **14.02.80**

(54) **Verseilelement für optische Kabel.**

(30) Priorität: **28.02.79 DE 2907704**

(43) Veröffentlichungstag der Anmeldung:
**17.09.80 Patentblatt 80/19**

(45) Bekanntmachung des Hinweises auf die Patenterteilung:
**21.09.83 Patentblatt 83/38**

(84) Benannte Vertragsstaaten:
**AT BE DE FR GB IT NL SE**

(56) Entgegenhaltungen:
**DE-A-2 429 670**
**DE-A-2 430 857**
**DE-A-2 434 280**
**DE-A-2 604 307**
**DE-A-2 728 642**
**DE-B-2 749 096**
**FR-A-2 370 292**
**GB-A-1 423 590**

(73) Patentinhaber: **SIEMENS AKTIENGESELLSCHAFT,**
**Berlin und München Wittelsbacherplatz 2,**
**D-8000 München 2 (DE)**

(72) Erfinder: **Oestreich, Ulrich, Dipl.-Ing.,**
**Karl-Witthalm-Strasse 15, D-8000 München 70 (DE)**
Erfinder: **Zeidler, Günter, Dr., Weidenstrasse 25,**
**D-8034 Germering (DE)**
Erfinder: **Schöber, Gernot, Waterloo-Strasse 63,**
**D-8000 München 71 (DE)**

Verseilelement für optische Kabel

Die Erfindung betrifft ein Verseilelement für optische Kabel, bestehend aus mehreren Lichtwellenleiter-Fasern für die Lichtwellenübertragung und aus einer die Fasern lose umgebenden Schutzhülle, deren Innendurchmesser grösser ist als der Aussendurchmesser eines hypothetischen, die Fasern umgebenden Zylinders.

Derartige Aufbauelemente sind aus der deutschen Offenlegungsschrift 2 528 991 bekannt. Da sich die Lichtwellenleiter-Fasern bei einem derartigen Aderaufbau ausreichend unabhängig vom Schutzmantel bewegen können, wird die Lichtwellenleiter-Faser während des Biegens der Ader nur geringen mechanischen Beanspruchungen ausgesetzt. Dies trifft aber streng genommen nur für eine Faser zu, die sich lose in einem schlauchförmigen Schutzmantel befindet. Werden dagegen mehrere Fasern in gestreckter Form in einem solchen Schutzmantel untergebracht, so erfolgt bei Biegungen eine gegenseitige Verschiebung der Fasern; dies kann zu einer unzulässigen mechanischen Beanspruchung der Fasern führen.

Nun besteht aber von der Praxis her die Forderung, in einem Kabel eine grössere Anzahl von Lichtwellenleiter-Fasern unterzubringen, wobei die mechanische Belastung für jede in einem Kabel untergebrachte Faser möglichst gering sein soll. Diese Forderung könnte man, wie es aus der deutschen Offenlegungsschrift 2 528 991 bekannt ist, beispielsweise dadurch erfüllen, dass man jede Faser lose in einem schlauchförmigen Schutzmantel unterbringt und diese sogenannten Hohladern nach bekannten Regeln der Fernmeldekabeltechnik zu einer Kabelseele zusammenfasst. Die Zusammenfassung mehrerer Lichtwellenleiter-Fasern in einem Kabel geht auch aus der deutschen Auslegeschrift 2 628 069 hervor. Hier wird vorgeschlagen, die Adern im Zentrum des Kabels anzuordnen. Jede Glasfaser besitzt einen fest aufsitzenden Mantel und mehrere solche Adern sind lose und unverseilt in einer doppelschichtigen Schutzhülle untergebracht. Über dieser Hülle befindet sich ein geeigneter Kabelmantel. Ein solcher Kabelaufbau ist im allgemeinen nur für eine begrenzte Anzahl von Adern geeignet.

Aus der DE-A-2 728 642 ist es bekannt, eine Aderfüllmasse zwischen einer Lichtleitfaser und der diese Lichtleitfaser umgebenden Hülle vorzusehen, wobei die Masse aus Silikonharz, Polyesterharz oder Polyurethan bestehen kann. Derartige Aderfüllmassen haben jedoch andere Aufgaben zu erfüllen als die Seelenfüllmassen, welche ihren Platz zwischen den aus einzelnen Lichtwellenleitern zusammengesetzten Verseilelementen haben.

Im Hinblick auf den Kosten- und Querschnittsaufwand von Lichtwellenleiter-Kabeln, insbesondere bei solchen mit grossen Faserzahlen, wird eine grössere Packungsdichte bei verringertem Verkabelungsaufwand gefordert. Der Erfindung liegt die Aufgabe zu Grunde, bei den als dicht gepackte Grundelemente ausgebildeten Verseilelementen sicherzustellen, dass es zu keiner unzulässig grossen Beanspruchung der empfindlichen Lichtwellenleiter-Fasern kommt, und zwar sowohl beim Verseilvorgang selbst als auch später zum Beispiel bei der Verlegung. Gemäss der Erfindung wird die gestellte Aufgabe bei dem Verseilelement der eingangs beschriebenen Art dadurch gelöst, dass die Fasern je für sich mit einer Schicht aus weichelastischem Material umgeben und miteinander verseilt sind und dass der Raum zwischen diesen miteinander verseilten optischen Fasern und der harten und widerstandsfähigen Schutzhülle mit einer sehr weich bleibenden, leicht verformbaren Füllmasse gefüllt ist, die keine Neigung zum Nachhärten, Schmelzen oder Einfrieren zeigt und aus thixotropierten Ölen besteht.

Durch die thixotropierenden Zusätze weist die Füllmasse keine nennenswerte Neigung zur chemischen Alterung, Verhärtung, zum Einfrieren oder Schmelzen auf. Diese Füllmasse bewirkt auch eine gute Längswasserdichtigkeit, so dass sich bei beschädigter Schutzhülle Wasser nicht in Aderrichtung ausbreiten kann. Da die Lichtwellenleiter-Fasern mit einer Schicht aus weichelastischem Material umgeben sind, werden sie sowohl beim Verseilvorgang als auch später (zum Beispiel bei der Verlegung) ausreichend gegen mechanische Beanspruchungen geschützt. Die thixotropierte Füllmasse wirkt durch ihre Eigenschaften ebenfalls unerwünschten Belastungen der Lichtwellenleiter-Fasern entgegen.

Die ohnehin zweckmässige Füllung des Verseilelementes ist hier von besonderem Vorteil, da die Verseilung aus Kostengründen vorteilhafterweise ohne Rückdrehung erfolgt und eine thixotrope Füllmasse beim Schneiden des Verseilelementes das undefinierte Aufspringen des Bündels weitgehend verhindert. Die bei Verseilung ohne Rückdrehung auftretende Torsion der Fasern, die bei 100 bis 200 mm Schlaglänge zu Oberflächen-Scherspannungen von 100 bis 50 N/mm² führt, setzt allerdings ausreichend dauerfeste Fasern voraus. Die Faser selbst sollte daher bei üblichen Abmessungen etwa auf den doppelten Durchmesser mit oberflächengehärtetem Silicon-Kautschuk oder einem anderen Material vergleichbarer Weichheit aufgedickt sein. Gegebenenfalls muss die Verseilung mit Rückdrehung erfolgen, was besonders durch gewisse SZ-Verseilverfahren einfach zu erreichen ist. Die Schlaglängen können dann erheblich verkürzt werden, was für die Flexibilität des Produktes vorteilhaft ist. Die Füllmasse muss so weich ausgebildet sein, dass sie den Lichtwellenleiter-Fasern genügend Bewegungsfreiheit ermöglicht und daher nicht zur Dämpfungserhöhung beiträgt oder zu einer mechanischen Dauerbeanspruchung der Fasern führt. Mittels Verseilung werden die Lichtwellenleiterfasern auf einen möglichst kleinen Querschnitt zusammengefasst, wobei die freie Beweglichkeit für das gesamte verseilte Grundbündel durch den lose darüber angeordneten Schutzmantel garantiert wird. Eine besonders vorteilhafte Ausführungsform ergibt sich somit bei Verseilelementen, bei denen mehrere gepolsterte Lichtwellenleiter-Fasern mit grosser Schlaglänge miteinander verseilt sind und als Einheit lose in einer gefüllten Schutzhülle liegen.

Aus der deutschen Offenlegungsschrift 2 429 670 ist ein optischer Leitkörper mit einer oder mehreren optischen Fasern und mit einem die Faser oder die Fasern umgebenden äusseren Schutzmantel bekannt, bei dem die Zwischenräume zwischen der Faser und dem Mantel bzw. zwischen den Fasern und zwischen diesen und dem Mantel im wesentlichen mit einem pastenartigen Medium über im wesentlichen die gesamte Länge des Leitkörpers gefüllt sind. Dieser Aufbau bewirkt zwar ebenfalls eine Wasserdichtigkeit, erfüllt aber seine Aufgabe weniger gut; Medien dieser Art frieren bei tiefen Temperaturen ein und schmelzen bei höheren. Da der Schutzmantel unmittelbar auf dem Faserbündel aufliegt, ist die Bewegungsfreiheit der Adern stark eingeschränkt. Es ist ferner aus der deutschen Offenlegungsschrift 2 434 280 eine aus Lichtwellenleiter-Fasern aufgebaute Leitung bekannt, bei der die Faser zum Schutz gegen äussere mechanische Einflüsse mit einer mehrschichtigen Umhüllung versehen ist. Die erste unmittelbar an die Lichtwellenleiter-Faser grenzende Schicht ist derart ausgebildet, dass geringe Eigenbewegungen der Lichtwellenleiter-Faser in bezug auf diese Umhüllung möglich sind; diese erste Schicht besteht vorzugsweise aus pulverförmigem oder feinkörnigem Material. Eine derartige Anordnung ist bezüglich der Fertigung aufwendig und in bezug auf die zu erwartende Dämpfung bei mechanischer Beanspruchung ungünstig. Soweit Wasser eindringt, kann sie einfrieren, was schon auf wenige Zentimeter Länge den Lichtwellenleiter unbrauchbar machen kann.

Im Hinblick auf die gemäss der Erfindung vorgesehene Lösung der Aufgabe ist es wesentlich, dass jede Lichtwellenleiter-Faser mit einer Polsterschicht aus elastischem Material umgeben ist, um eine gegenseitige mechanische Entkopplung sicherzustellen und um die Oberfläche der Fasern zu schützen, und ferner, dass diese gepolsterten Fasern miteinander verseilt sind; diese Verseilung, die auch eine SZ-Verseilung sein kann, bewirkt eine wesentliche Vergleichmässigung der Beweglichkeit der Fasern gegeneinander und hält die Fasern zusammen; schliesslich soll der Raum zwischen diesen verseilten Fasern und der das Aderbündel lose umgebenden Schutzhülle mit einer weichbleibenden Masse ausgefüllt werden, um das Verseilelement für sich schon längswasserdicht auszubilden, ohne die Beweglichkeit der Lichtwellenleiter-Fasern in der Schutzhülle merklich zu beeinträchtigen. In vorteilhafter Weise kann nun die Schutzhülle auch aus zwei Schichten von hinsichtlich ihren mechanischen Eigenschaften unterschiedlichen Kunststoffen bestehen, wie dies in der deutschen Offenlegungsschrift 2 513 722 angegeben ist.

Es ist zwar aus der deutschen Offenlegungsschrift 2 728 553 schon bekannt, eine mit Spiel in einer Schutzhülle liegende Faser mit einer Schutzschicht aus elastischem Material zu umgeben; hierdurch soll erreicht werden, dass bei annähernd gleichbleibender Beweglichkeit der Glasfaser in der Hülle und bei gleicher Stabilität der Hülle trotzdem auftretende Zug- und Druckbeanspruchungen verteilt und damit unschädlich gemacht werden. Würde man nun eine grössere Zahl derartiger lose umhüllter Lichtwellenleiter-Fasern zu einem Kabel zusammenfassen, so würde ein derartiger Aufbau verhältnismässig querschnitts- und kostenaufwendig werden.

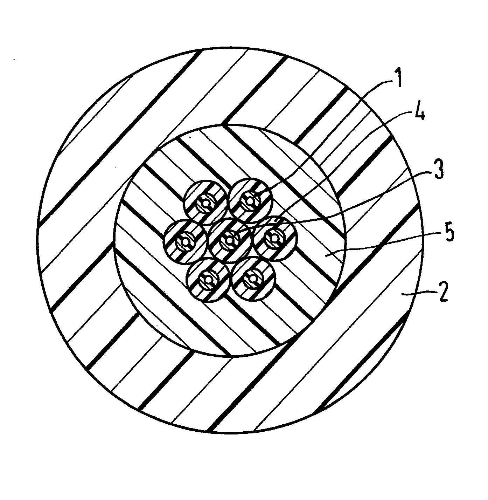

Von diesem Stand der Technik ausgehend stellt das neue Verseilelement, wie in der Figur dargestellt, eine sehr kostengünstige Konstruktion dar, da Verseilung, Umhüllung und Füllung der Ader mit geeigneten Massen in einem Arbeitsgang erfolgen können. Die Figur zeigt sieben in der festen Hülle 2 lose angeordnete Lichtwellenleiter-Fasern 1, wobei eine Lichtwellenleiter-Faser als Kernelement 3 dient, welches von den übrigen sechs verseilten Fasern 1 umgeben ist. Jede Faser trägt eine Polsterschicht 4. Der Raum zwischen den verseilten Adern 1 und der Hülle 2 ist mit Aderfüllmasse 5 ausgefüllt.

Die feste Schutzhülle 2 kann vorteilhafterweise derjenigen normaler gefüllter Adern entsprechen und zur Erzielung bestimmter mechanisch-thermischer Eigenschaften vorzugsweise als Doppelschichthülle ausgeführt sein. Von Vorteil ist bei dem Verseilelement nach der Erfindung der relativ niedrige Material- und Querschnittsbedarf insbesondere bei der Vereinigung von vier, sieben und mehr Adern. Prinzipiell können auch mehr als sieben Adern, z.B. $1 + 6 + 12$ oder $(1) + 7 + 13$ in zwei Lagen verseilt werden, wobei noch grössere Packungsdichten erzielt werden, ohne dass das beschriebene Prinzip ungültig wird. Die feste Schutzhülle kann auch für sich durch Auf- oder Einbringen von Glas- oder Aramidgarn gegen Längsbelastung verstärkt werden.

Mit diesen Aufbauten kann in Bündel- oder Lagenverseilung weiter gearbeitet werden, wobei jede Seele oder jedes Hauptbündel ein Stahl- oder Glasfaserkunststoff-Stützelement erhalten kann. Auch die direkte Weiterverarbeitung eines Verseilelementes zum fertigen Kabel ist möglich, bei welcher ein Verseilelement je nach Kabeltype mit einer zusätzlichen Bewehrung und/oder mit einem Kunststoffmantel versehen wird, dann allerdings nur die Belastbarkeit eines nicht verseilten Kabels aufweist.

Bei einem bevorzugten Seelenaufbau können so z.B. $[(1) + 6 + 12 + 18] \cdot 7 = 252$ Fasern in einem Seelendurchmesser von 16,5 mm (Kabel-Durchmesser 20,0 mm) untergebracht werden. Die Säuberung der Faser von der Füllmasse unterscheidet sich von der heute bei gefüllten Kabeln üblichen nur geringfügig. Um die Handhabung der Einzelelemente zu erleichtern, empfiehlt es sich, die Gummi-Polster der einzelnen Fasern verschieden einzufärben.

Weitere besonders vorteilhafte Ausführungsformen des Verseilelementes nach der Erfindung werden im folgenden behandelt:

Entsprechend dem dekadischen Ortskabelaufbau ist es vorteilhaft, Grundbündel aus zehn oder 2×10 Fasern aufzubauen. Dies kann entweder dadurch geschehen, dass um einen auf den 1,94fachen Durchmesser aufgedickten Lichtwellenleiter neun weitere Lichtwellenleiter oder dass zehn Lichtwellenleiter um eine dickere Stützfaser z.B. aus billigem Glas verseilt werden. Die Stützfaser soll vorteilhafterweise einen höheren E-Modul als der Lichtwellenleiter besitzen, also z.B. aus natürlichem Quarzglas bestehen. In einer weiteren vorteilhaften Ausführungsform soll die Stützfaser eine Stufenindexfaser (z.B. Glas-Plastik) sein und zur Signalisierung oder als Dienstleitung verwendet werden. 2×10 Fasern (für jeden Teilnehmer Hin- und Rückfaser) werden unter sonst gleichen Gesichtspunkten im Aufbau (1)+7+13 erhalten, womit die Packungsdichte weiter steigt. In Fällen, in denen nicht völliges Isoliervermögen gefordert ist, kommt auch ein gepolsterter Federstahldraht von z.B. 0,2 mm Durchmesser in Frage.

Als Polsterung für die Lichtwellenleiter kommt insbesondere eine 20 bis 100 µm dicke, weiche Elastomerenschicht in Frage. Dieses Polster kann beim Faserziehen aufgebracht werden. Es kann z.B. im kalten flüssigen Zustand mit einem Lakkiernippel aufgetragen und entweder durch eine Ofenstrecke oder durch UV-Belichtung vernetzt werden. Ein Auftragen aus der Schmelzphase ist bei thermoplastischen Elastomeren, z.B. auf Polyolefinbasis, möglich. Zur Erleichterung der Handhabung kann das Elastomerenpolster durch eine Gleit- und eine Absetzschicht ergänzt werden.

Neben der regulären Verseilung kommt bei der Grundbündelherstellung auch die SZ-Verseilung in Frage. Es kann dann zusätzlich erforderlich sein, den Verseilverband durch eine Haltewendel oder einen dichtaufsitzenden, durch Extrusion hergestellten, dünnwandigen Schlauch zusammenzuhalten. Man wird jedoch versuchen, ohne Haltewendel oder Halteschlauch auszukommen. Dies gelingt am einfachsten, indem das Spiel zwischen Bündel und Innenwand der Hülle so gehalten wird, dass der Umkehrbogen (d.h. die Umkehrstelle der Verseileinrichtung) nicht aufklappen kann. Einen gewissen Beitrag gegen das Aufspringen des SZ-Bündel kann wieder die thixotrope Füllmasse leisten.

## Patentansprüche

1. Verseilelement für optische Kabel, bestehend aus mehreren Lichtwellenleiter-Fasern (1) für die Lichtwellenübertragung und aus einer die Fasern (1) lose umgebenden Schutzhülle (2), deren Innendurchmesser grösser ist als der Aussendurchmesser eines hypothetischen, die Fasern umgebenden Zylinders, dadurch gekennzeichnet, dass die Fasern (1) je für sich mit einer Schicht (4) aus weichelastischem Material umgeben und miteinander verseilt sind und dass der Raum zwischen diesen miteinander verseilten optischen Fasern und der harten und widerstandsfähigen Schutzhülle (2) mit einer sehr weich bleibenden, leicht verformbaren Füllmasse (5) gefüllt ist, die keine Neigung zum Nachhärten, Schmelzen oder Einfrieren zeigt und aus thixotropierten Ölen besteht.

2. Verseilelement nach Anspruch 1, dadurch gekennzeichnet, dass die Lichtwellenleiter-Fasern mit Rückdrehung mit grosser Schlaglänge, insbesondere zwischen 50 und 500 mm miteinander verseilt sind.

3. Verseilelement nach Anspruch 1, dadurch gekennzeichnet, dass die Adern mit einer Schlaglänge von etwa 100 bis 300 mm ohne Rückdrehung verseilt sind.

4. Verseilelement nach Anspruch 1, dadurch gekennzeichnet, dass die Lichtwellenleiter-Fasern nach dem SZ-Verseilverfahren verseilt und entweder mittels einer Haltewendel oder eines Halteschlauches zusammengefasst sind oder in der Hülle so untergebracht sind, dass diese das Aufspringen des SZ-verseilten Bündels nicht zulässt.

5. Verseilelement nach einem der vorhergehenden Ansprüche, dadurch gekennzeichnet, dass die Fasern mit einem thermoplastischen Elastomeren auf der Basis Butadien-Styrol oder Polypropylen umgeben sind.

6. Verseilelement nach einem der Ansprüche 1 bis 4, dadurch gekennzeichnet, dass die Fasern mit einer oberflächengehärteten Schicht aus Silicon-Kautschuk überzogen sind.

7. Verseilelement nach einem der Ansprüche 1 bis 4, dadurch gekennzeichnet, dass die Fasern mit einer Schicht aus Urethan-Acrylat überzogen sind.

8. Verseilelement nach einem der vorhergehenden Ansprüche, dadurch gekennzeichnet, dass die die Fasern umgebenden Schichten aus elastischem Material unterschiedlich eingefärbt sind.

9. Verseilelement nach einem der vorhergehenden Ansprüchen, dadurch gekennzeichnet, dass das Verseilelement mit Überlänge kleiner als 1‰ in der Schutzhülle angeordnet ist.

10. Verseilelement nach einem der vorhergehenden Ansprüche, dadurch gekennzeichnet, dass die Schutzhülle zweischichtig ausgebildet ist und die innere Schicht aus einem Fluorpolymer, z.B. aus Äthylenmonochlortrifluoräthylen und die äussere Schicht insbesondere aus einem Polyterephthalat, z.B. einem Polybutylenterephthalat bestehen.

11. Verseilelement nach einem der Ansprüche 1 bis 9, dadurch gekennzeichnet, dass die Schutzhülle aus geeigneten hochmolekularen Polyolefinen, z.B. aus Polypropylen besteht.

12. Verseilelement nach einem der vorhergehenden Ansprüche, dadurch gekennzeichnet, dass die Schutzhülle mit Glas- oder Aramidgarnen verstärkt wird.

13. Verseilelement nach einem der vorhergehenden Ansprüche, dadurch gekennzeichnet, dass die Lichtwellenleiter-Fasern um einen als Stützelement dienenden aufgedickten Lichtwellenleiter verseilt sind.

14. Verseilelement nach einem der Ansprüche 1 bis 12, dadurch gekennzeichnet, dass die Lichtwellenleiter-Fasern um eine dicke Stützfaser aus nichtoptischem Glas verseilt sind.

15. Verseilelement nach den Ansprüchen 1 bis 12, dadurch gekennzeichnet, dass für die Lichtwellenleiter-Fasern ein gepolsterter Stahldraht vorgesehen ist.

## Claims

1. A stranded element for optical cables consisting of a plurality of light-waveguide fibres (1) for the transmission of light waves, and of a protective casing (2) which loosely surrounds the fibres (1) and the inner diameter of which is greater than the outer diameter of a theoretical cylinder surrounding the fibres, characterised in that the fibres (1) are each independently surrounded by a coating (4) of a soft elastic material and are stranded together; and that the space between these stranded optical fibres and the hard and resistant protective casing (2) is filled with a filler (5) which remains very soft and, is slightly deformable, exhibits no tendency towards subsequent hardening, melting or freezing, and consists of thixotropic oils.

2. A stranded element as claimed in Claim 1, characterised in that the light waveguide fibres are stranded to one another with reverse twist with a long length of lay, in particular of between 50 and 500 mm.

3. A stranded element as claimed in Claim 1, characterised in that the fibres are stranded with a length of lay of about 100 to 300 mm without reverse twist.

4. A stranded element as claimed in Claim 1, characterised in that the light waveguide fibres are stranded in accordance with the SZ-stranding method and are either held together by means of a support coil or a support tube, or are accommodated in the casing in such a way that the latter prevents the splitting apart of the SZ-stranded bundle.

5. A stranded element as claimed in one of the preceding Claims, characterised in that the fibres are surrounded by a thermoplastic elastomer having a butadiene-styrene or polypropylene basis.

6. A stranded element as claimed in one of Claims 1 to 4, characterised in that the fibres are coated with a surface-hardened layer of silicone rubber.

7. A stranded element as claimed in one of Claims 1 to 4, characterised in that the fibres are coated with a layer of urethane-acrylate.

8. A stranded element as claimed in one of the preceding Claims, characterised in that the layers of elastic material which surround the fibres are differently coloured.

9. A stranded element as claimed in one of the preceding Claims, characterised in that the stranded element is arranged in the protective casing with an excess length of less than 1‰.

10. A stranded element as claimed in one of the preceding Claims, characterised in that the protective casing consists of two layers, the inner layer of which is made of a fluorinated polymer, e.g. from ethylenemonochlortrifluorethylene, whilst the outer layer consists in particular of a polyterephthalate, e.g. a polybutylene terephthalate.

11. A stranded element as claimed in one of Claims 1 to 9, characterised in that the protective casing consists of suitable high molecular polyolefines, e.g. polypropylene.

12. A stranded element as claimed in one of the preceding Claims, characterised in that the protective casing is reinforced with glass or aramide yarn.

13. A stranded element as claimed in one of the preceding Claims, characterised in that the light waveguide fibres are stranded around a thickened light waveguide which serves as a support element.

14. A stranded element as claimed in one of Claims 1 to 12, characterised in that the light waveguide fibres are stranded around a thick support fibre made of non-optical glass.

15. A stranded element as claimed in Claims 1 to 12, characterised in that a padded steel wire is provided as a support element for the light waveguide fibres.

## Revendications

1. Elément de câblage pour des câbles optiques, constitué par plusieurs fibres de guide d'ondes de lumière (1) pour la transmission des ondes de lumière et par une enveloppe de protection (2) entourant librement les fibres (1) et dont le diamètre intérieur est supérieur au diamètre extérieur d'un cylindre imaginaire entourant les fibres, caractérisé par le fait que les fibres (1) sont chacune entourées d'une couche (4) faite avec un matériau élastique mou et sont câblées entre elles, et que l'espace entre ces fibres optiques qui sont câblées entre elles et l'enveloppe de protection dure et résistante (2) est rempli avec une masse de remplissage (5) restant molle et facilement déformable, ladite masse de remplissage ne présentant aucune tendance à un post-durcissement, à une fusion ou à une congélation et étant constituée par des huiles rendues thixotropes.

2. Elément de câblage selon la revendication 1, caractérisé par le fait que les fibres à guides d'ondes de lumière sont câblées entre elles avec des torsions et avec une longueur de pas importante, en particulier entre 50 et 500 mm.

3. Elément de câblage selon la revendication 1, caractérisé par le fait que les conducteurs sont câblés avec une longueur de pas d'environ 100 à 300 mm, sans détorsion.

4. Elément de câblage selon la revendication 1, caractérisé par le fait que les fibres de guides d'ondes de lumière sont câblées selon le procédé de câblage SZ et sont assemblées soit à l'aide d'une spirale de fixation ou d'un tuyau de maintien ou sont logées de telle manière dans une enveloppe que celle-ci n'autorise pas la destruction du faisceau câblé en SZ.

5. Elément de câblage selon l'une des revendications précédentes, caractérisé par le fait que les fibres sont entourées d'un élastomère thermoplastique à base de styrène-butadiène ou de polypropylène.

6. Elément de câblage selon l'une des revendications 1 à 4, caractérisé par le fait que les fibres sont revêtues d'une couche à surface durcie faite avec du caoutchouc de silicone.

7. Elément de câblage selon l'une des revendications 1 à 4, caractérisé par le fait que les fibres sont recouvertes d'une couche en uréthanne-acrylate.

8. Elément de câblage selon l'une des revendications précédentes, caractérisé par le fait que les couches qui entourent les fibres sont faites avec un matériau élastique teinté de façon différente.

9. Elément de câblage selon l'une des revendications précédentes, caractérisé par le fait que l'élément de câblage est disposé dans l'enveloppe de protection avec un excédent de longueur qui est inférieur à 1‰.

10. Elément de câblage selon l'une des revendications précédentes, caractérisé par le fait que l'enveloppe de protection est réalisée avec deux couches et que la couche intérieure est constituée par un polymère fluoré, par exemple par de l'éthylènemonochlorotrifluoroéthylène et que la couche extérieure est constituée, en particulier, par un polytéréphthalate, par exemple par un poly(téréphthalate de butylène).

11. Elément de câblage selon l'une des revendications 1 à 9, caractérisé par le fait que l'enveloppe de protection est constituée par une polyoléfine à masse moléculaire élevée appropriée, par exemple par du polypropylène.

12. Elément de câblage selon l'une des revendications précédentes, caractérisé par le fait que la couche de protection est renforcée avec des fils de verre ou d'aramide.

13. Elément de câblage selon l'une des revendications précédentes, caractérisé par le fait que les fibres de guides d'ondes de lumière sont câblées autour d'un guide d'ondes de lumière épaissi qui sert d'élément d'appui.

14. Elément de câblage selon l'une des revendications 1 à 12, caractérisé par le fait que les fibres de guides d'ondes de lumière sont câblées autour d'une fibre d'appui épaisse faite avec un verre de qualité non optique.

15. Elément de câblage selon les revendications 1 à 12, caractérisé par le fait qu'un fil d'acier capitonné est prévu comme élément d'appui pour les fibres de guides d'ondes de lumière.